# EUROPEAN PATENT SPECIFICATION

(11) **EP 4 049 924 B1**
(45) Date of publication and mention of the grant of the patent: **21.10.2026**
(21) Application number: 22156327.3
(22) Date of filing: 11.02.2022
(51) Int. Cl.: B63H 25/42, B63H 21/21

(54) **MARINE PROPULSION CONTROL SYSTEM, MARINE VESSEL CAPABLE OF PERFORMING DYNAMIC POSITIONING CONTROL AND METHOD TO CONTROL PROPULSION OF A MARINE VESSEL**
SCHIFFSANTRIEBSSTEUERUNGSSYSTEM, SCHIFF MIT DYNAMISCHER POSITIONIERUNGSSTEUERUNG UND VERFAHREN ZUR STEUERUNG DES SCHIFFSANTRIEBS
SYSTÈME DE COMMANDE DE PROPULSION MARINE, VAISSEAU MARIN CAPABLE D'EFFECTUER UNE COMMANDE DE POSITIONNEMENT DYNAMIQUE ET PROCÉDÉ DE COMMANDE DE LA PROPULSION D'UN VAISSEAU MARIN

(30) Priority: 26.02.2021 JP 2021029927
(43) Date of publication of application: 31.08.2022
(73) Proprietor: Yamaha Hatsudoki Kabushiki Kaisha, Iwata-shi, Shizuoka 438-8501 (JP)
(72) Inventor: Ikegaya, Yuji, Iwata-shi (JP)
(74) Representative: Grünecker Patent- und Rechtsanwälte PartG mbB

(56) References cited:
- EP-B1- 2 256 029
- JP-A- 2009 243 590
- JP-A- 2020 147 176
- JP-B2- 5 191 199
- US-A1- 2010 023 192

## Description

The present invention relates to a marine propulsion control system according to the preamble of independent claim 1, a marine vessel capable of performing dynamic positioning control and a method to control propulsion of a marine vessel according to the preamble of independent claim 15. Such a marine propulsion control system and such a method to control propulsion of a marine vessel can be taken from the prior art document JP 2009-243590 A.

There are known marine vessels equipped with a marine propulsion control system that performs dynamic positioning control in which the thrust of an engine and the acting direction (steering direction) of the thrust are integrally controlled to keep the marine vessel in the vicinity of a target position (see JP 2009-243590 A, for example). During execution of dynamic positioning control, the thrust of the engine is reduced to curb sudden movement of the marine vessel and avoid discomfort of passengers who enjoy fishing or a party on the marine vessel. Moreover, prior art document US 2010/0023192 A1 discloses a dynamic control system for a marine vessel having two or more waterjet units as the primary propulsion system of the vessel, for maintaining vessel position or velocity when in a dynamic control mode. Said system comprises a position or velocity indicator to indicate vessel position or velocity or deviations in vessel position or velocity; such as a satellite-based positioning system indicator, or accelerometers as a relative position indicator, a heading indicator to indicate vessel heading from position heading or yaw rate or deviations in vessel heading or yaw rate, such as a compass as an absolute heading indicator or a yaw rate sensor as a relative heading indicator, and a controller to control the operation of the waterjet units to substantially maintain the vessel position or velocity, and vessel heading or yaw rate when the dynamic control mode is enabled.

While dynamic positioning control is started in response to an operation of a button or a switch by a vessel operator, the vessel operator may start the dynamic positioning control by operating the button or the switch before the movement of the marine vessel in the bow direction stops.

Many marine vessels equipped with a marine propulsion control system that performs dynamic positioning control are relatively large cruisers. Such large cruisers have large inertia forces and reduced thrust is used in dynamic positioning control. If the cruisers still move in the bow direction, it takes time to completely stop the movement in the bow direction with reduced thrust in the reverse direction that can be generated in dynamic positioning control. As a result, the marine vessels may depart from the target position significantly. Thus, there is room for improvement from the viewpoint of achieving dynamic positioning control.

It Is the object of the present invention to provide a marine propulsion control system, a marine vessel and a method to control propulsion of a marine vessel each able to smoothly perform dynamic positioning control.

According to the present invention said object is solved by a propulsion control system having the features of independent claims 1. Moreover, according to the present invention said object is solved by a marine vessel according to claim 15. Furthermore, said object is solved by a method to control propulsion of a marine vessel having the features of independent claim 15. Preferred embodiments are laid down in the dependent claims.

According to a preferred embodiment, a propulsion control system for a marine vessel including at least one power source for generating thrust, is configured to perform dynamic positioning control of the marine vessel. The propulsion control system comprises a memory, and a controller coupled to the memory. The controller is configured or programmed to: control movement of the marine vessel by the at least one power source, and while performing dynamic positioning control of the marine vessel, perform deceleration control that reduces a bow direction speed of the marine vessel. In the propulsion control system, the controller is preferably configured to change the second control value so that thrust of each of the at least one power source necessary for performing the deceleration control gradually increases at a start of the deceleration control. More preferably, an increase change rate of the thrust of each of the at least one power source necessary for performing the deceleration control varies according to specifications of the marine vessel. The controller is also preferably configured to maintain the thrust of each of the at least one power source necessary for performing the deceleration control at a predetermined value, when the increasing thrust of each of the at least one power source necessary for performing the deceleration control reaches the predetermined value while performing the deceleration control. More preferably, the predetermined value varies according to the specifications of the at least one power source.

According to another preferred embodiment, a marine vessel configured to perform dynamic positioning control, comprises at least one power source configured to generate thrust, and the above-described propulsion control system.

According to another preferred embodiment, a propulsion control system for a marine vessel including at least one power source for generating thrust, is configured to change to a mode in which the marine vessel is kept in a certain position. The propulsion control system comprises a memory, and a controller coupled to the memory. The controller is configured or programmed to: control movement of the marine vessel by the at least one power source, and in a case where the marine vessel has changed to the mode in which the marine vessel is kept in a certain position, perform deceleration control that reduces a bow direction speed of the marine vessel.

According to another preferred embodiment, a marine vessel is configured to change to a mode in which the marine vessel is kept in a certain position. The marine vessel comprises at least one power source configured to generate thrust, and the above-described propulsion control system.

According to another preferred embodiment, a propulsion control system for a marine vessel including at least one power source for generating thrust, is configured to change to a mode in which the marine vessel is guided along a predetermined route. The propulsion control system comprises a memory, and a controller coupled to the memory. The controller is configured or programmed to: control movement of the marine vessel by the at least one power source; and in a case where the marine vessel has changed to the mode in which the marine vessel is guided along a predetermined route, when the marine vessel deviates from the predetermined route in a bow direction of the marine vessel, perform deceleration control that prevents the marine vessel from moving in the bow direction.

According to another preferred embodiment, a marine vessel is configured to change to a mode in which the marine vessel is guided along a predetermined route. The marine vessel comprises at least one power source configured to generate thrust, and the above-described propulsion control system.

According to preferred embodiments, while the dynamic positioning control of the marine vessel is performed, or in a case where the marine vessel has changed to a mode in which the marine vessel is kept in a certain position, the deceleration control that reduces the bow direction speed of the marine vessel is performed in the marine propulsion control system. This prevents the marine vessel from departing too far from the target position for dynamic positioning control. Further, in a case where the marine vessel has changed to a mode in which the marine vessel is guided along a predetermined route, when the marine vessel deviates from the predetermined route in a bow direction of the marine vessel, deceleration control that prevents the marine vessel from moving in the bow direction is performed in the marine propulsion control system. This prevents the marine vessel from departing too far from the predetermined route in dynamic positioning control. As a result, dynamic positioning control can be performed smoothly.

The above and other elements, features, steps, characteristics and advantages of the present invention will become more apparent from the following detailed description of the preferred embodiments with reference to the attached drawings.

### BRIEF DESCRIPTION OF THE DRAWINGS

FIG. 1 is a plan view schematically illustrating a marine vessel equipped with a marine propulsion control system according to an embodiment.
FIG. 2 is a block diagram schematically describing the configuration of the marine propulsion control system installed on the marine vessel in FIG. 1.
FIGS. 3A and 3B are external views schematically illustrating configurations of a remote control and a joystick in FIG. 2.
FIGS. 4A and 4B are flowcharts illustrating a deceleration control process performed by a BCU of FIG. 2.
FIG. 5 is a block diagram for describing the totaling of a deceleration thrust and a dynamic positioning thrust in step S411 of FIG. 4B.
FIG. 6 is a graph for describing deceleration control in steps S406 to S418 in FIGS. 4A and 4B.
FIGS. 7A and 7B are diagrams for describing the acting direction of the thrust of outboard motors in deceleration control.
FIGS. 8A to 8C are diagrams for describing conditions for ending deceleration control.
FIG. 9 is a diagram for describing deceleration control in a Drift Point Track mode.

### DETAILED DESCRIPTION OF THE PREFERRED EMBODIMENTS

Hereinafter, preferred embodiments will be described with reference to the drawings.

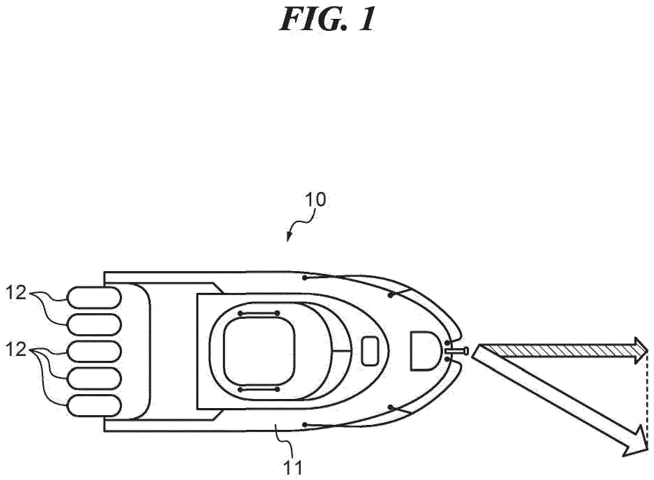

FIG. 1 is a plan view schematically illustrating a marine vessel on which a marine propulsion control system according to an embodiment is installed. In FIG. 1, a marine vessel 10 is, for example, a planing boat, and includes a hull 11 and five outboard motors 12. The outboard motors 12 are attached to the stern of the hull 11. Each outboard motor 12 has an engine and a propeller, where the engine defines and functions as a drive source. Each outboard motor 12 generates thrust with the propeller rotated by the driving force of the engine. Note that the marine vessel to which the outboard motors 12 are provided is not limited to a planing boat, and may be, for example, a displacement type marine vessel. Further, the number of outboard motors 12 included in the marine vessel 10 as power sources is not limited to five, and may be at least one or more. The orientation of the outboard motors 12 with respect to the hull 11 can be changed by a steering mechanism, thereby changing the acting direction of the thrust of the outboard motors 12 to change the traveling direction of the marine vessel 10.

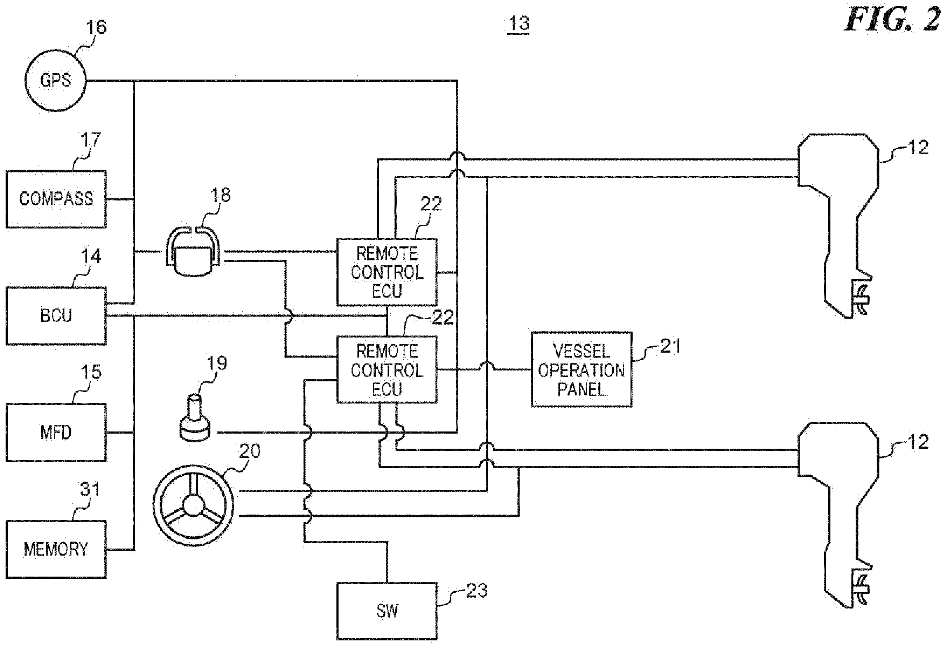

FIG. 2 is a block diagram for schematically describing the configuration of a marine propulsion control system 13 installed on the marine vessel 10 in FIG. 1. In FIG. 2, only two outboard motors 12 are purposely depicted for ease of understanding.

In FIG. 2, the marine propulsion control system 13 includes the outboard motors 12, a boat control unit (BCU) 14 (controller), a multi function display (MFD) 15, a GPS 16, a compass (heading unit) 17, a remote control 18, a joystick 19, a steering wheel 20, a vessel operation panel 21, remote control ECUs 22 (power source controllers), a switch (SW) 23, and a memory 31. The components of the marine propulsion control system 13 are communicatively connected to one another.

The GPS 16 grasps the current position of the marine vessel 10 and transmits the current position of the marine vessel 10 to the BCU 14. The compass 17 grasps the traveling direction of the marine vessel 10 and transmits the traveling direction of the marine vessel 10 to the BCU 14. The MFD 15 is a display indicating a vessel speed and an engine speed, and includes a touch panel to accept an instruction from a vessel operator. The accepted instruction is transmitted to the BCU 14. The memory 31 stores control programs and data necessary for the operation of the BCU 14.

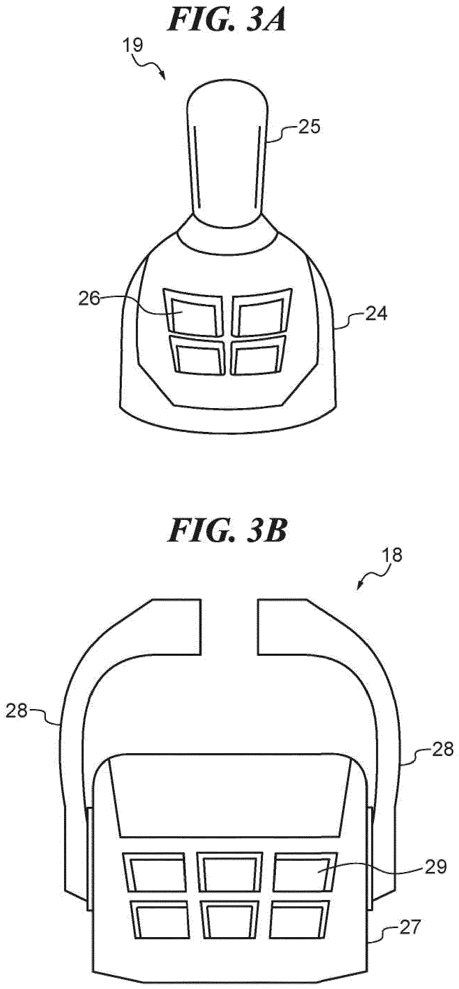

FIGS. 3A and 3B are external views schematically illustrating configurations of the remote control 18 and the joystick 19 in FIG. 2. FIG 3A illustrates the joystick 19 and FIG 3B illustrates the remote control 18.

In FIG. 3A, the joystick 19 includes a base 24, a stick 25 attached to the top of the base 24, and multiple buttons 26 provided on the base 24. The stick 25 is swingable relative to the base 24 so that a vessel operator can intuitively steer the marine vessel 10. For example, when the stick 25 is moved in the back and forth direction, the joystick 19 emits a signal for moving the marine vessel 10 in the back and forth direction, and when the stick 25 is moved in the left and right direction, the joystick 19 emits a signal for moving the marine vessel 10 in the left and right direction. When the stick 25 is pivoted, the joystick 19 emits a signal for pivoting the marine vessel 10. The signal from the joystick 19 is transmitted to the remote control ECUs 22 and the BCU 14.

To one of the buttons 26, an instruction to start or end dynamic positioning control is assigned, and the joystick 19 transmits an instruction signal to start or end dynamic positioning control to the remote control ECUs 22 and the BCU 14 in response to depression of the button 26. Note that multiple modes may be provided in dynamic positioning control, and the mode to be set may change from one mode to another each time when the button 26 is depressed. Examples of the multiple modes that can be set in dynamic positioning control include Fish Point, Stay Point, Drift Point, and Drift Point Track (all of which are registered trademarks in the United States and other countries). In the Fish Point mode, the thrust of outboard motors 12 is controlled to keep the marine vessel 10 in the target position (a certain position). In the Stay Point mode, the thrust of the outboard motors 12 and the acting direction of the thrust are integrally controlled to keep the marine vessel 10 in the target position and maintain the bow direction in a particular direction. In the Drift Point mode, the acting direction of the thrust of the outboard motors 12 is controlled to maintain the bow direction in a particular direction. In the Drift Point Track mode, the thrust of the outboard motors 12 and the acting direction of the thrust are integrally controlled to maintain the bow direction in a particular direction and guide the marine vessel 10 along a route (predetermined route) previously input by the vessel operator on the MFD 15.

In FIG. 3B, the remote control 18 includes a base 27, levers 28 attached to sides of the base 27, and multiple buttons 29 provided on the base 27. The levers 28 are movable back and forth with respect to the base 27, and when the vessel operator moves the levers 28 forward, the remote control 18 emits a signal for moving the marine vessel 10 in the bow direction, and when the vessel operator moves the levers 28 backward, the remote control 18 emits a signal for moving the marine vessel 10 in the stern direction. The signal from the remote control 18 is transmitted to the remote control ECUs 22 and the BCU 14.

To one of the buttons 29, an instruction to start or end dynamic positioning control is assigned, and the remote control 18 transmits an instruction signal to start or end dynamic positioning control to the remote control ECUs 22 and the BCU 14 in response to the depression of the button 29. Note that similarly to the button 26, the mode of dynamic positioning control may change from one mode to another each time when the button 29 is depressed.

Returning to FIG. 2, the steering wheel 20 accepts the steering operation of a vessel operator, and transmits a steering angle signal corresponding to the accepted operation to the remote control ECUs 22. The SW 23 accepts an instruction to turn on or start the outboard motors 12, and transmits a signal corresponding to the accepted instruction to the remote control ECUs 22.

The BCU 14 grasps the situation of the marine vessel 10 on the basis of the signals transmitted from the components of the marine propulsion control system 13, determines the thrust to be generated by the outboard motors 12 and the acting direction of the thrust to be taken, and transmits the result to the remote control ECUs 22. That is, the BCU 14 controls the movement of the marine vessel 10 by the outboard motors 12 which define and function as a power source. The BCU 14 further performs deceleration control, which will be described later, while performing dynamic positioning control of the marine vessel 10. Remote control ECUs 22 are provided, one for every outboard motor 12, and control the thrust of the respective outboard motors 12 and the acting direction of the thrust according to a signal transmitted from the BCU 14, the remote control 18, the joystick 19, or the like.

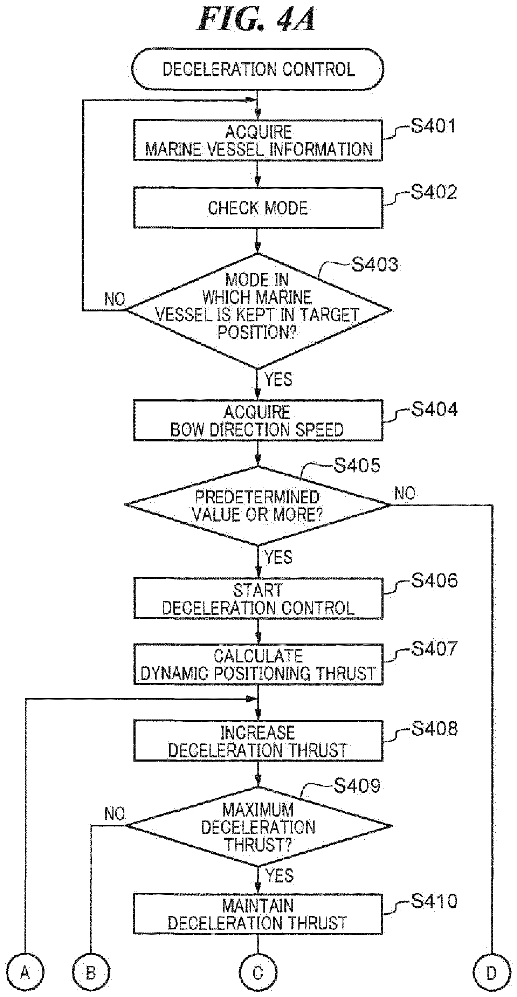

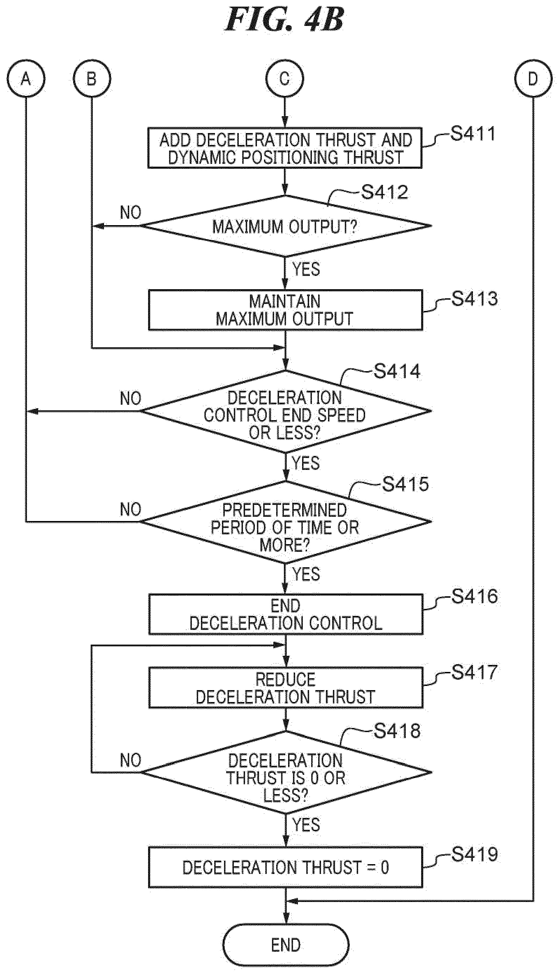

FIGS. 4A and 4B are flowcharts illustrating deceleration control process performed by the BCU 14 in FIG. 2. This process is performed while the dynamic positioning control is performed, in other words, after the button 26 of the joystick 19 or the button 29 of the remote control 18 is depressed to perform the dynamic positioning control.

First, the BCU 14 acquires information on the position, the vessel speed, and the traveling direction (see white arrow of FIG. 1) of the marine vessel 10 from the GPS 16 and the compass 17, and acquires information on the number, the model (specifications), the engine speed, and the like of the outboard motors 12 included in the marine vessel 10 from the remote control ECUs 22 (step S401). Further, the BCU 14 checks which mode the dynamic positioning control is currently set to on the basis of the number of times of depression of the button 26 of the remote control 18 or the button 29 of the joystick 19 (step S402).

Next, the BCU 14 determines whether or not the set mode is a mode in which the marine vessel 10 is kept in the target position (step S403). Specifically, the BCU 14 determines whether or not the set mode corresponds to either the Fish Point mode or the Stay Point mode. If the set mode is neither the Fish Point mode nor the Stay Point mode, the process returns to step S401. On the other hand, if the set mode corresponds to either the Fish Point mode or the Stay Point mode, the BCU 14 acquires the speed in the bow direction (see the hatched arrow of FIG. 1) on the basis of the vessel speed and the traveling direction of the marine vessel 10 (step S404).

Thereafter, the BCU 14 determines whether or not the speed in the bow direction is a predetermined value or more (step S405). In a case where the bow direction is less than the predetermined value, the BCU 14 ends this process. On the other hand, in a case where the speed in the bow direction is the predetermined value or more, the BCU 14 changes a deceleration control execution flag to ON, and starts deceleration control that reduces the speed of the marine vessel 10 in the bow direction (step S406). Here, the predetermined value (predetermined speed) is a speed in the bow direction at which the marine vessel 10 can be kept in the vicinity of the target position even with the thrust in the reverse direction that can be generated in dynamic positioning control. Note that the predetermined value varies according to the number and model (specifications) of the outboard motors 12 included in the marine vessel 10. As a result, the BCU 14 can determine whether or not to perform deceleration control according to the information about the specifications and number of the outboard motors 12 which define and function as power sources. For example, in a case where the number of outboard motors 12 included in the marine vessel 10 is large and the outboard motors 12 are large, it is expected that the hull 11 is also large and hence the inertia force of the marine vessel 10 is large. Therefore, the predetermined value is set to be relatively small so that deceleration control is actively performed. On the other hand, in a case where the number of outboard motors 12 included in the marine vessel 10 is small and the outboard motors 12 are small, it is expected that the hull 11 is also small and hence the inertia force of the marine vessel 10 is small. Therefore, it is not necessary to actively perform deceleration control, and it is considered that the marine vessel 10 can be kept in the vicinity of the target position even with the thrust in the reverse direction that can be generated in dynamic positioning control. Accordingly, in this case, the predetermined value is set to be relatively large. By setting the predetermined value in this manner, it is possible to keep the marine vessel 10 from passing the target position or from suddenly decelerating.

Next, the BCU 14 calculates the thrust necessary for performing the dynamic positioning control in the Fish Point mode or the Stay Point mode on the basis of the position, the vessel speed, and the traveling direction of the marine vessel 10 (step S407). Specifically, the BCU 14 calculates the thrust (hereinafter referred to as "dynamic positioning thrust") necessary for moving the marine vessel 10 so as to eliminate the difference between the current position and the target position of the marine vessel 10 for each outboard motor 12. Note that the maximum value of the dynamic positioning thrust that can be generated in the Fish Point mode or the Stay Point mode is set in advance by a vessel operator using the button 29 of the remote control 18 or the button 26 of the joystick 19. In a case where the target position is set in a sea area where the tidal current is gentle, the maximum value of the dynamic positioning thrust is set to be relatively small so that the marine vessel 10 does not suddenly accelerate and surprise the passengers. In another case where the target position is set in a sea area where the tidal current is strong, the maximum value of the dynamic positioning thrust is set to be relatively large so that the marine vessel 10 can stay at the target position against the tidal current.

Thereafter, the BCU 14 increases the deceleration thrust generated in each outboard motor 12 at a predetermined change rate (step S408), and determines whether or not the deceleration thrust has reached a preset maximum deceleration thrust (step S409). Here, the maximum deceleration thrust varies according to the maximum value of the dynamic positioning thrust and the model (specifications) of each outboard motor 12. In a case where the maximum value of the dynamic positioning thrust is set to be relatively small, the maximum deceleration thrust is also set to be relatively small, so that the deceleration thrust does not greatly exceed the dynamic positioning thrust and cause sudden deceleration of the marine vessel 10. In another case where the outboard motors 12 are large, the inertia force of the marine vessel 10 is expected to be large, and thus, the maximum deceleration thrust is set to be relatively large. In another case where the outboard motors 12 are small, the inertia force of the marine vessel 10 is expected to be small, and thus, the maximum deceleration thrust is set to be relatively small.

If the deceleration thrust has not reached the preset maximum deceleration thrust, the process proceeds to step S414 to be described later, and if the deceleration thrust has reached the predetermined maximum deceleration thrust, the BCU 14 maintains the deceleration thrust at the maximum deceleration thrust (step S410). By maintaining the deceleration thrust at the maximum deceleration thrust, it is possible to prevent the deceleration thrust from becoming excessively large and requiring time for reducing the deceleration thrust when ending the deceleration control. This allows the deceleration control to be ended with a satisfactory response.

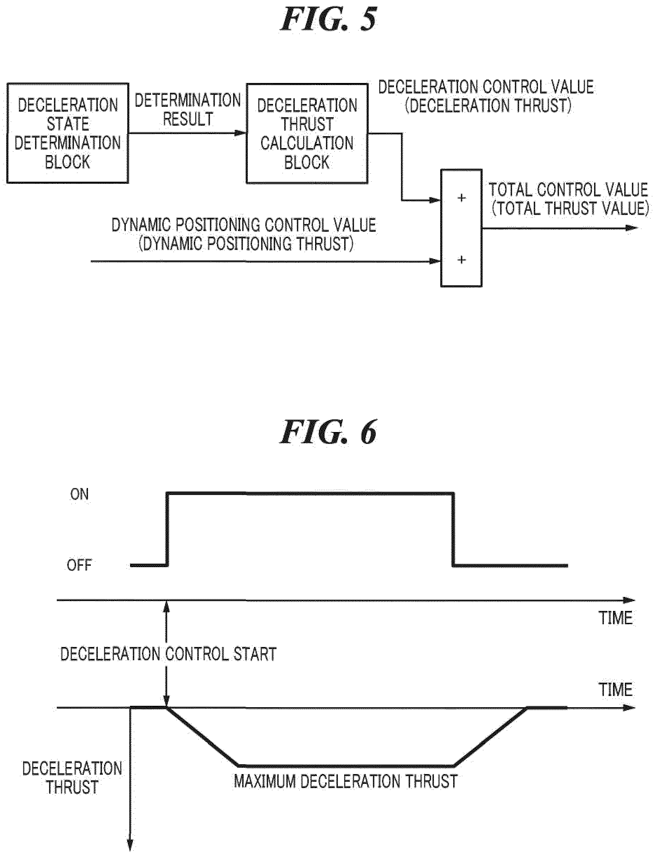

Next, the BCU 14 adds the deceleration thrust and the dynamic positioning thrust (step S411). FIG. 5 is a block diagram for describing the totaling of the deceleration thrust and the dynamic positioning thrust in step S411 of FIG. 4B, which is performed for each outboard motor 12. First, a deceleration state determination block of the BCU 14 makes the determination in step S405, and if the speed in the bow direction is a predetermined value or more, the block transmits a determination result such as "change deceleration control execution flag to ON" to a deceleration thrust calculation block of the BCU 14. When receiving the determination result "change deceleration control execution flag to ON", the deceleration thrust calculation block calculates a deceleration control value (second control value) corresponding to the deceleration thrust. As described in step S408, the deceleration control value is changed so as to increase the deceleration thrust. The BCU 14 further calculates a dynamic positioning control value (first control value) corresponding to the dynamic positioning thrust, and outputs (transmits) a total control value obtained by adding the deceleration control value and the dynamic positioning control value to the remote control ECU 22. This total control value corresponds to a total thrust value obtained by adding the deceleration thrust and the dynamic positioning thrust. Then, the remote control ECU 22 controls the thrust of the corresponding outboard motor 12 on the basis of the input total control value.

Incidentally, in a case where the target position exists in the bow direction in the Fish Point mode or the Stay Point mode, a dynamic positioning thrust acting in the bow direction may be calculated. At this time, when the calculated absolute value of the dynamic positioning thrust is larger than the absolute value of the deceleration thrust acting in the stern direction, the marine vessel 10 may not stop and may pass the target position. To cope with this, the BCU 14 adjusts the deceleration control value and the dynamic positioning control value so that each outboard motor 12 generates thrust based on the total control value in a direction opposite to the bow direction (stern direction). For example, the BCU 14 adjusts the total control value to cause each outboard motor 12 to generate thrust acting in the stern direction by increasing the deceleration control value or decreasing the dynamic positioning control value, and keeps the marine vessel 10 from passing the target position. Note that the total control value of FIG. 5 is calculated separately for each outboard motor 12, and different total control values may be output to the remote control ECUs 22 because the dynamic positioning thrust may be different for each outboard motor 12 depending on the mode.

Thereafter, the BCU 14 determines whether or not the total thrust value obtained by adding the deceleration thrust and the dynamic positioning thrust reaches the maximum output of the outboard motor 12 of the model acquired in step 401 (step S412). If the total thrust value has reached the maximum output, the BCU 14 maintains the total thrust value at the maximum output (step S413). The maximum output here is an output value determined by the BCU 14 for each model of the outboard motor 12, and is, for example, a maximum value of the output allowed to be exhibited by the outboard motor 12 during execution of the dynamic positioning control. On the other hand, if the total thrust value has not reached the maximum output, step S413 is skipped.

Next, the BCU 14 determines whether or not the speed in the bow direction has become equal to or less than the deceleration control end speed (another predetermined speed) (step S414). Here, the deceleration control end speed is a speed in the bow direction at which the marine vessel 10 can be stopped in a short period of time even with the thrust in the reverse direction that can be generated in dynamic positioning control. Note that the deceleration control end speed varies according to the number and model of the outboard motors 12 included in the marine vessel 10. In a case where the number of outboard motors 12 included in the marine vessel 10 is large and the outboard motors 12 are large, it is expected that the inertia force of the marine vessel 10 is large. Hence, the deceleration control end speed is set to be relatively low so that the deceleration control is easily continued. In another case where the number of outboard motors 12 included in the marine vessel 10 is small and the outboard motors 12 are small, it is expected that the inertia force of the marine vessel 10 is small. Hence, it is not necessary to continue the deceleration control for a long time, and the deceleration control end speed is set to be relatively high.

If it is determined in step S414 that the speed in the bow direction is still higher than the deceleration control end speed, the process returns to step S408, and the BCU 14 continues the deceleration control and increases the deceleration thrust. On the other hand, if the speed in the bow direction is the deceleration control end speed or less, the BCU 14 determines whether or not the duration of the deceleration control from the start of the deceleration control in step S406 has reached a predetermined period of time or more (step S415). The predetermined period of time here corresponds to a period of time sufficient for stopping the marine vessel 10 by deceleration control if there is no influence of the tidal current on the marine vessel 10. Note that the predetermined period of time varies according to the number and model of the outboard motors 12 included in the marine vessel 10. In a case where the number of outboard motors 12 included in the marine vessel 10 is large and the outboard motors 12 are large, the inertia force of the marine vessel 10 is large, and the period of time required to stop the marine vessel 10 by the deceleration control becomes long. Hence, the predetermined period of time is set to be relatively long. In another case where the number of outboard motors 12 included in the marine vessel 10 is small and the outboard motors 12 are small, the inertia force of the marine vessel 10 is small, and the period of time required to stop the marine vessel 10 by deceleration control becomes short. Hence, the predetermined period of time is set to be relatively short.

If it is determined in step S415 that the duration of the deceleration control is less than the predetermined period of time, the process returns to step S408, and the BCU 14 continues the deceleration control and increases the deceleration thrust. On the other hand, when the duration of the deceleration control is the predetermined period of time or more, the BCU 14 changes the deceleration control execution flag to OFF, ends the deceleration control (step S416), and reduces the deceleration thrust (step S417). Next, the BCU 14 determines whether or not the deceleration thrust has become 0 or less (step S418). If the deceleration thrust is not 0 or less, the process returns to step S417, and the BCU 14 further reduces the deceleration thrust. On the other hand, if the deceleration thrust is 0 or less, the BCU 14 sets the deceleration thrust to 0 again (step S419), and ends this process.

FIG. 6 is a graph for describing deceleration control in steps S406 to S418 in FIGS. 4A and 4B. In FIG. 6, the upper graph illustrates the transition of the deceleration control execution flag, and the lower graph illustrates the transition of the deceleration thrust.

First, the BCU 14 changes the deceleration control execution flag from OFF to ON on the basis of the determination result of step S405, and starts deceleration control. At this time (at the start of the deceleration control), the BCU 14 does not rapidly increase the deceleration thrust, but gradually increases the deceleration thrust. That is, the BCU 14 increases the deceleration thrust at a predetermined change rate (increase change rate). As a result, the marine vessel 10 is prevented from suddenly decelerating and surprising the passengers. The gradual increase of the deceleration thrust is achieved by repeating the flow of step S408, NO in step S409, and NO in step S414 or S415. Note that the increase change rate of the deceleration thrust varies according to the number and model (specifications) of the outboard motors 12 included in the marine vessel 10. In a case where the number of outboard motors 12 included in the marine vessel 10 is small and the outboard motors 12 are small, it is expected that the inertia force of the marine vessel 10 is small. Hence, the deceleration thrust is more gently increased so that the marine vessel 10 does not suddenly decelerate. In another case where the number of outboard motors 12 included in the marine vessel 10 is large and the outboard motors 12 are large, it is expected that the inertia force of the marine vessel 10 is large. Hence, the deceleration thrust is increased slightly quickly so as to stop the marine vessel 10 in a short period of time.

Thereafter, the BCU 14 maintains the deceleration thrust at the maximum deceleration thrust on the basis of the determination result of step S409. Then, the BCU 14 changes the deceleration control execution flag from ON to OFF on the basis of the determination result of step S415, and ends the deceleration control. At this time, the BCU 14 does not sharply reduce the deceleration thrust, but gradually reduces the deceleration thrust. The gradual reduction of the deceleration thrust is achieved by repeating the flow of step S417 and NO in step S418. Note that around the end of the deceleration control, a sufficient period of time elapses from the start of the dynamic positioning control, and a sufficient dynamic positioning thrust is generated. Hence, even if the deceleration thrust is rapidly reduced, the behavior of the marine vessel 10 is not disturbed. Accordingly, the deceleration thrust can be rapidly reduced.

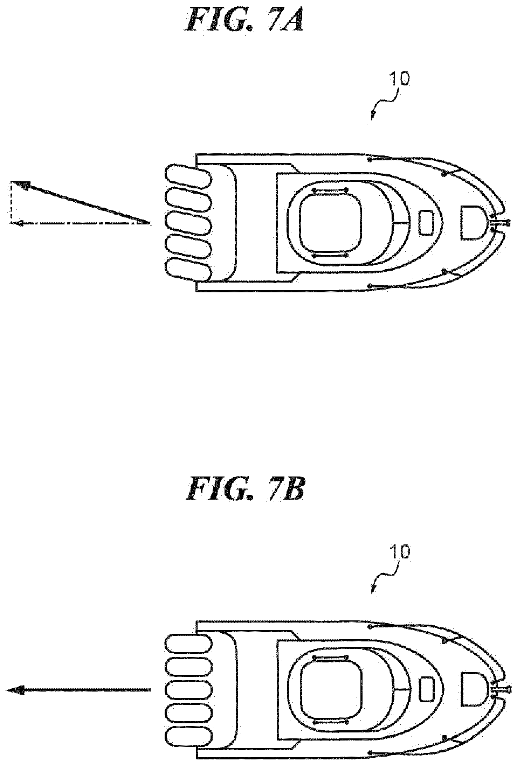

In a case where, the BCU 14 performs deceleration control under the condition that the acting direction of the thrust of each outboard motor 12 is not neutral and is toward the starboard side or the port side, the deceleration thrust indicated by the black arrow in FIG. 7A is not in direct opposition to the bow direction of the marine vessel 10, and a component force of the deceleration thrust (indicated by long dashed short dashed line in FIG. 7A) is in direct opposition to the bow direction of the marine vessel 10. Accordingly, not all the generated deceleration thrust can be used for deceleration of the speed in the bow direction, and a yaw moment is generated in the marine vessel 10 to disturb the course of the marine vessel 10.

To cope with this, while performing deceleration control, as illustrated in FIG. 7B, the BCU 14 maintains the acting direction of the thrust of each outboard motor 12 to be neutral, and makes the generated deceleration thrust directly opposite to the bow direction of the marine vessel 10. That is, the BCU 14 maintains the steering of the marine vessel 10 at a neutral position while performing deceleration control. As a result, the whole of the generated deceleration thrust is used for deceleration of the speed in the bow direction, and the speed in the bow direction is efficiently reduced. Further, no yaw moment is generated in the marine vessel 10 to disturb the course of the marine vessel 10.

In the deceleration control process of FIGS. 4A and 4B, when the speed in the bow direction is the deceleration control end speed or less (YES in step S414) and the duration of the deceleration control is a predetermined period of time or more (YES in step S415), the BCU 14 ends the deceleration control.

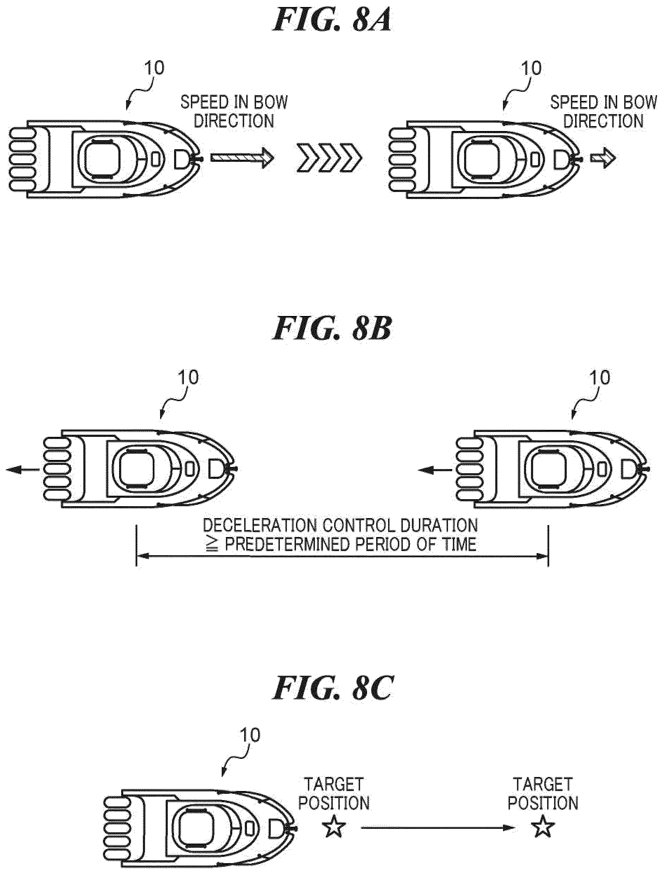

Alternatively, when the speed of the marine vessel 10 in the bow direction is the deceleration control end speed or less as illustrated in FIG. 8A, the BCU 14 may end the deceleration control without requiring other conditions. Alternatively, when the marine vessel 10 does not stop even when the deceleration control is performed for a predetermined period of time or more as illustrated in FIG. 8B, the BCU 14 may end the deceleration control without requiring other conditions.

Further, when the target position for dynamic positioning control is moved in the bow direction of the marine vessel 10 as illustrated in FIG. 8C, too, the BCU 14 may end the deceleration control without requiring other conditions. This prevents a situation where the marine vessel 10 is hindered from reaching the changed target position due to the deceleration thrust.

According to the present preferred embodiment, while the dynamic positioning control of the marine vessel 10 is performed (e.g., when marine vessel 10 has changed to a mode in which the marine vessel 10 is kept in a certain position), deceleration control that reduces the bow direction speed of the marine vessel 10 is performed. This prevents the marine vessel 10 from departing too far from the target position for dynamic positioning control, and as a result, it is possible to smoothly perform dynamic positioning control. Since the marine vessel 10 hardly passes the target position due to the execution of deceleration control, the BCU 14 is configured to notify a vessel operator of the abnormality by a buzzer or the MFD 15 when the marine vessel 10 passes the target position, but the notification of abnormality is rarely given. Therefore, a vessel operator can comfortably enjoy navigation of the marine vessel 10.

In the present preferred embodiment, when the speed of the marine vessel 10 in the bow direction is less than the predetermined value, deceleration control is not performed. That is, if the speed of the marine vessel 10 in the bow direction is less than a speed in the bow direction at which the marine vessel 10 can be kept in the vicinity of the target position even with a reverse thrust that can be generated in dynamic positioning control, the deceleration thrust is not generated. Hence, the marine vessel 10 can be stopped gently.

Further, in the present preferred embodiment, when the speed of the marine vessel 10 in the bow direction becomes equal to or less than the deceleration control end speed, the deceleration control is ended. That is, if the speed of the marine vessel 10 in the bow direction is equal to or less than a speed in the bow direction at which the marine vessel 10 can be stopped in a short period of time even with a reverse thrust that can be generated in dynamic positioning control, the deceleration thrust is not generated. Hence, the marine vessel 10 can similarly be stopped gently.

In the present preferred embodiment, when the duration of deceleration control is a predetermined period of time or more, the deceleration control is ended. That is, the deceleration control is ended in a case where the marine vessel 10 does not stop even after the elapse of a period of time sufficient for stopping the marine vessel 10 by deceleration control under no influence of the tidal current on the marine vessel 10, from the start of deceleration control. Such a case corresponds to a case in which the marine vessel 10 is actually washed away by a strong tidal current and is not stopped by any deceleration thrust. Then, as a result of the termination of deceleration control, the marine vessel 10 passes by the target position. At this time, the BCU 14 notifies a vessel operator of the abnormality by a buzzer or the MFD 15. As a result, the vessel operator learns that this sea area is such a sea area in which the marine vessel 10 is washed away by the occurrence of a strong tidal current or the like and the marine vessel 10 hardly stops, and that this sea area is inappropriate for performing dynamic positioning control.

Further, in the present preferred embodiment, the BCU 14 performs dynamic positioning control even after the deceleration control is ended. As a result, the marine vessel 10 does not depart from the target position after stopping in the vicinity of the target position, and even if deceleration control is ended before the marine vessel 10 reaches the target position, the marine vessel 10 gently reaches the target position by the dynamic positioning thrust.

Moreover, even when each outboard motor 12 is equipped not only with an engine but also an electric motor as a prime mover, or is equipped with only an electric motor, the present preferred embodiment can be used for the marine vessel 10 including such an outboard motor or motors as long as the electric motor is controlled by the BCU 14 or the remote control ECU 22. Further, even in a case where the marine vessel 10 includes at least one inboard/outboard motor or at least one inboard motor instead of the outboard motors 12 as power sources, the present preferred teaching can be used for such a marine vessel as long as at least one inboard/outboard motor or at least one inboard motor is controlled by the BCU 14 or the remote control ECU 22.

Furthermore, in the Fish Point mode, in order to give priority to quietness, some outboard motors 12 can be set to be stopped. When this setting is made, deceleration control is not performed. This ensures quietness.

In the present preferred embodiment described above, deceleration control is performed only when the mode set in dynamic positioning control is either the Fish Point mode or the Stay Point mode. However, deceleration control may be performed when the mode set in dynamic positioning control is the Drift Point Track mode as well.

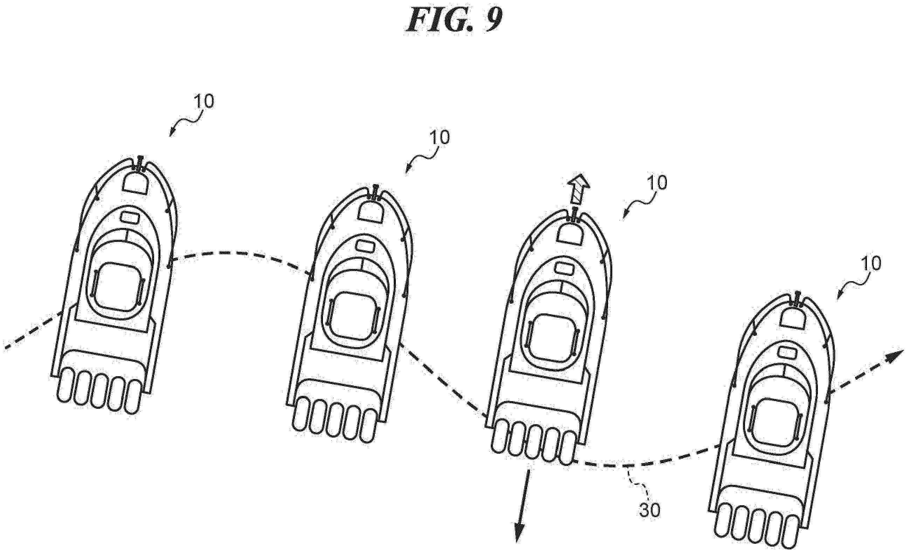

FIG. 9 is a diagram for describing deceleration control in the Drift Point Track mode. In a case where, in the Drift Point Track mode, the marine vessel 10 is guided along a route 30 previously input by a vessel operator on the MFD 15, when the marine vessel 10 deviates from the route 30 in the bow direction (third from left in FIG. 9) due to generation of the speed of the marine vessel 10 in the bow direction (hatched arrow in FIG. 9), deceleration control is performed and a deceleration thrust (black arrow in FIG. 9) acts on the marine vessel 10. That is, in a case where the marine vessel 10 has changed to a mode in which the marine vessel 10 is guided along a predetermined route, when the marine vessel 10 deviates in the bow direction from the predetermined route, the BCU 14 performs deceleration control that prevents the marine vessel 10 from moving in the bow direction. As a result, the movement of the marine vessel 10 in the bow direction is curbed, and the marine vessel 10 is returned to the route 30.

Note that the present teaching may be implemented by reading a program for implementing the functions of the above-described preferred embodiments from the memory 31 included in the marine propulsion control system 13, a ROM included in the BCU 14, or the like and executing the program by the BCU 14, or may be implemented by supplying a program for implementing the functions of the above-described preferred embodiments to the marine propulsion control system 13 through a network or a storage medium and executing the supplied program by the BCU 14. Further, the present teaching may also be implemented by a circuit (e.g., ASIC) that implements one or more functions of the BCU 14.

## Claims

1. A propulsion control system (13) for a marine vessel (10) including at least one power source (12) for generating thrust, the system is configured to perform dynamic positioning control of the marine vessel (10), the system comprising:
a memory (31); and
a controller (14) coupled to the memory (31) and configured or programmed to:
control movement of the marine vessel (10) by the at least one power source (12), **characterized in that** the controller (14) is configured or programmed to, while performing dynamic positioning control of the marine vessel (10), perform deceleration control that reduces a bow direction speed of the marine vessel (10), wherein the controller (14) is configured to acquire the bow direction speed of the marine vessel (10), and configured to perform the deceleration control in a case where the bow direction speed of the marine vessel (10) is a predetermined speed or more.

2. The propulsion control system (13) according to claim 1, **characterized by** at least one power source controller (22) that is configured to control the at least one power source (12), respectively,
wherein the controller (14) is configured to transmits, to each of the at least one power source controller (22), a total value of a first control value corresponding to thrust of corresponding one of the at least one power source (12) necessary for performing the dynamic positioning control, and a second control value corresponding to the thrust of the corresponding one of the at least one power source (12) necessary for performing the deceleration control.

3. The propulsion control system (13) according to claim 2, **characterized in that** the controller (14) is configured to adjust the first control value and the second control value so that each of the at least one power source (12) generates thrust based on the total value in a direction opposite to a bow direction of the marine vessel (10).

4. The propulsion control system (13) according to claim 2 or 3, **characterized in that** the controller (14) is configured to determine whether or not to perform the deceleration control according to information about specifications of the at least one power source (12) and the number of the at least one power source (12) included in the marine vessel (10).

5. The propulsion control system (13) according to any one of claims 2 to 4, **characterized in that** the controller (14) is configured to change the second control value so that thrust of each of the at least one power source (12) necessary for performing the deceleration control gradually increases at a start of the deceleration control.

6. The propulsion control system (13) according to claim 5, **characterized in that** the controller (14) is configured to maintain the thrust of each of the at least one power source (12) necessary for performing the deceleration control at a predetermined value, when the increasing thrust of each of the at least one power source (12) necessary for performing the deceleration control reaches the predetermined value while performing the deceleration control.

7. The propulsion control system (13) according to any one of claims 1 to 6, **characterized in that** the controller (14) is configured to end the deceleration control when the bow direction speed of the marine vessel (10) becomes equal to or less than another predetermined speed while performing the deceleration control.

8. The propulsion control system (13) according to any one of claims 1 to 6, **characterized in that** the controller (14) is configured to end the deceleration control when duration of the deceleration control reaches a predetermined period of time or more.

9. The propulsion control system (13) according to claim 8, **characterized in that** the predetermined period of time varies according to the number of the at least one power source (12) included in the marine vessel (10).

10. The propulsion control system (13) according to any one of claims 1 to 6, **characterized in that** the controller (14) is configured to end the deceleration control when a target position of the marine vessel (10) for the dynamic positioning control is moved in a bow direction of the marine vessel (10).

11. The propulsion control system (13) according to any one of claims 1 to 10, **characterized in that** the controller (14) is configured to perform the dynamic positioning control even after ending the deceleration control.

12. The propulsion control system (13) according to any one of claims 1 to 11, **characterized in that** the controller (14) is configured to maintain steering of the marine vessel (10) at a neutral position while performing the deceleration control.

13. The propulsion control system (13) according to claim 1, **characterized in that** the controller (14) is configured to acquire the bow direction speed of the marine vessel (10) on the basis of a vessel speed and a traveling direction of the marine vessel (10), configured to perform the deceleration control in a case where the bow direction speed of the marine vessel (10) is a predetermined speed or more, and configured to adjust the predetermined speed according to a size of the marine vessel (10).

14. A marine vessel (10) configured to perform dynamic positioning control and comprising:
at least one power source (12) configured to generate thrust; and
the propulsion control system (13) according to any one of claims 1 to 13.

15. A method to control propulsion of a marine vessel (10) including at least one power source (12) for generating thrust, the method is performing dynamic positioning control of the marine vessel (10), and comprises:
controlling movement of the marine vessel (10) by the at least one power source (12); **characterized by,** while performing dynamic positioning control of the marine vessel (10), performing deceleration control that reduces a bow direction speed of the marine vessel (10), further comprising acquiring the bow direction speed of the marine vessel (10), and perform the deceleration control in a case where the bow direction speed of the marine vessel (10) is a predetermined speed or more.

## Patentansprüche

1. Ein Antriebssteuersystem (13) für ein Wasserfahrzeug (10) , das zumindest eine Antriebsquelle (12) zur Erzeugung von Schub enthält, das System ist so konfiguriert, um eine dynamische Positionierungssteuerung des Wasserfahrzeugs (10) durchzuführen, das System umfasst:
einen Speicher (31); und
eine Steuerung (14), die mit dem Speicher (31) gekoppelt und so konfiguriert oder programmiert ist, um:
die Bewegung des Wasserfahrzeugs (10) durch die zumindest eine Antriebsquelle (12) zu steuern, **dadurch gekennzeichnet, dass** die Steuerung (14) so konfiguriert oder programmiert ist, dass sie während der Durchführung einer dynamischen Positioniersteuerung des Wasserfahrzeugs (10) eine Verzögerungssteuerung durchzuführen, welche die Bugrichtungsgeschwindigkeit des Wasserfahrzeugs (10) verringert, wobei die Steuerung (14) so konfiguriert ist, dass sie die Bugrichtungsgeschwindigkeit des Wasserfahrzeugs (10) erfasst, und so konfiguriert ist, dass sie die Verzögerungssteuerung in einem Fall durchführt, in dem die Bugrichtungsgeschwindigkeit des Wasserfahrzeugs (10) eine vorbestimmte Geschwindigkeit oder mehr beträgt.

2. Das Antriebssteuersystem (13) gemäß Anspruch 1, **gekennzeichnet durch** zumindest eine Antriebsquellensteuerung (22), die so konfiguriert ist, um jeweils die zumindest eine Antriebsquelle (12) zu steuern,
wobei die Steuerung (14) so konfiguriert ist, um an jede der zumindest einen Antriebsquellensteuerung (22) einen Gesamtwert aus einem ersten Steuerwert, der dem für die Durchführung der dynamischen Positioniersteuerung erforderlichen Schub der entsprechenden der zumindest einen Antriebsquelle (12) entspricht, und einem zweiten Steuerwert, der dem für die Durchführung der Verzögerungssteuerung erforderlichen Schub der entsprechenden der zumindest einen Antriebsquelle (12) entspricht, zu übermitteln.

3. Das Antriebssteuersystem (13) gemäß Anspruch 2, **dadurch gekennzeichnet, dass** die Steuerung (14) so ausgelegt ist, dass sie den ersten Steuerwert und den zweiten Steuerwert so einstellt, dass jede der zumindest einen Antriebsquelle (12) auf der Grundlage des Gesamtwerts einen Schub in einer Richtung erzeugt, die der Bugrichtung des Wasserfahrzeugs (10) entgegengesetzt ist.

4. Das Antriebssteuersystem (13) gemäß Anspruch 2 oder 3, **dadurch gekennzeichnet, dass** die Steuerung (14) so konfiguriert ist, um zu bestimmen, ob die Verzögerungssteuerung durchgeführt werden soll oder nicht, anhand von Informationen über die Spezifikationen der zumindest einen Antriebsquelle (12) und der Anzahl der in dem Wasserfahrzeug (10) enthaltenen zumindest einen Antriebsquelle (12).

5. Das Antriebssteuersystem (13) gemäß irgendeinem der Ansprüche 2 bis 4, **dadurch gekennzeichnet, dass** die Steuerung (14) so konfiguriert ist, um den zweiten Steuerwert so zu ändern, dass der für die Durchführung der Verzögerungssteuerung erforderliche Schub jeder der zumindest einen Antriebsquelle (12) zu Beginn der Verzögerungssteuerung graduell ansteigt.

6. Das Antriebssteuersystem (13) gemäß Anspruch 5, **dadurch gekennzeichnet, dass** die Steuerung (14) so konfiguriert ist, um den für die Durchführung der Verzögerungssteuerung erforderlichen Schub jeder der zumindest einen Antriebsquelle (12) auf einem vorgegebenen Wert zu halten, wenn der zunehmende Schub jeder der zumindest einen Antriebsquelle (12), der für die Durchführung der Verzögerungssteuerung erforderlich ist, während der Durchführung der Verzögerungssteuerung den vorgegebenen Wert erreicht.

7. Das Antriebssteuersystem (13) gemäß irgendeinem der Ansprüche 1 bis 6, **dadurch gekennzeichnet, dass** die Steuerung (14) so konfiguriert ist, dass sie die Verzögerungssteuerung beendet, wenn die Bugrichtungsgeschwindigkeit des Wasserfahrzeugs (10) während der Durchführung der Verzögerungssteuerung gleich oder kleiner als eine weitere vorgegebene Geschwindigkeit wird.

8. Das Antriebssteuersystem (13) gemäß irgendeinem der Ansprüche 1 bis 6, **dadurch gekennzeichnet, dass** die Steuerung (14) so konfiguriert ist, dass sie die Verzögerungssteuerung beendet, wenn die Dauer der Verzögerungssteuerung einen vorbestimmten Zeitraum oder mehr erreicht.

9. Das Antriebssteuersystem (13) gemäß Anspruch 8, **dadurch gekennzeichnet, dass** die vorgegebene Zeitraum je nach der Anzahl der zumindest ein im Wasserfahrzeug (10) enthaltene Antriebsquelle (12) variiert.

10. Das Antriebssteuersystem (13) gemäß irgendeinem der Ansprüche 1 bis 6, **dadurch gekennzeichnet, dass** die Steuerung (14) so konfiguriert ist, um die Verzögerungssteuerung zu beenden, wenn sich eine Zielposition des Wasserfahrzeugs (10) für die dynamische Positionierungssteuerung in Bugrichtung des Wasserfahrzeugs (10) verschiebt.

11. Das Antriebssteuersystem (13) gemäß irgendeinem der Ansprüche 1 bis 10, **dadurch gekennzeichnet, dass** die Steuerung (14) so konfiguriert ist, um die dynamische Positionssteuerung auch nach Beendigung der Verzögerungssteuerung durchzuführen.

12. Das Antriebssteuersystem (13) gemäß irgendeinem der Ansprüche 1 bis 11, **dadurch gekennzeichnet, dass** die Steuerung (14) so konfiguriert ist, dass sie die Steuerung des Wasserfahrzeugs (10) während der Durchführung der Verzögerungssteuerung in einer neutralen Position hält.

13. Das Antriebssteuersystem (13) gemäß Anspruch 1, **dadurch gekennzeichnet, dass** die Steuerung (14) so konfiguriert ist, um die Bugrichtungsgeschwindigkeit des Wasserfahrzeugs (10) auf der Grundlage einer Fahrgeschwindigkeit und einer Fahrtrichtung des Wasserfahrzeugs (10) zu erfassen, konfiguriert ist, um die Verzögerungssteuerung in einem Fall durchzuführen, in dem die Bugrichtungsgeschwindigkeit des Wasserfahrzeugs (10) eine vorbestimmte Geschwindigkeit oder mehr beträgt, und konfiguriert ist, um die vorbestimmte Geschwindigkeit entsprechend der Größe des Wasserfahrzeugs (10) anzupassen.

14. Ein Wasserfahrzeug (10), das zur Durchführung einer dynamischen Positioniersteuerung konfiguriert ist und umfasst:
zumindest eine Antriebsquelle (12), die zur Erzeugung von Schub konfiguriert ist; und das Antriebssteuerungssystem (13) gemäß irgendeinem der Ansprüche 1 bis 13.

15. Ein Verfahren zur Steuerung des Antriebs eines Wasserfahrzeugs (10), das zumindest eine Antriebsquelle (12) zur Erzeugung von Schub enthält, das Verfahren führt eine dynamische Positioniersteuerung des Wasserfahrzeugs (10) durch und umfasst:
Steuerung der Bewegung des Wasserfahrzeugs (10) durch die zumindest eine Antriebsquelle (12); **gekennzeichnet durch,** während der Durchführung einer dynamischen Positioniersteuerung des Wasserfahrzeugs (10), Durchführen einer Verzögerungssteuerung, die eine Bugrichtungsgeschwindigkeit des Wasserfahrzeugs (10) verringert, wobei das Verfahren ferner das Erfassen der Bugrichtungsgeschwindigkeit des Wasserfahrzeugs (10) umfasst und die Verzögerungssteuerung in einem Fall durchführt, in dem die Bugrichtungsgeschwindigkeit des Wasserfahrzeugs (10) eine vorbestimmte Geschwindigkeit oder mehr beträgt.

## Revendications

1. Système de commande de propulsion (13) pour un navire (10) incluant au moins une source d'énergie (12) destinée à générer une poussée, le système est configuré pour effectuer la commande de positionnement dynamique du navire (10), le système comprenant :
une mémoire (31) ; et
un contrôleur (14) couplé à la mémoire (31) et configuré ou programmé pour :
commander le déplacement du navire (10) à l'aide de ladite au moins une source d'énergie (12),
**caractérisé en ce que** le contrôleur (14) est configuré ou programmé pour, tout en effectuant la commande de positionnement dynamique du navire (10), effectuer une commande de décélération qui réduit la vitesse dans la direction de la proue du navire (10),
dans lequel le contrôleur (14) est configuré pour acquérir la vitesse dans la direction de la proue du navire (10), et configuré pour effectuer la commande de décélération dans le cas où la vitesse dans la direction de la proue du navire (10) est égale ou supérieure à une vitesse prédéterminée.

2. Système de commande de propulsion (13) selon la revendication 1, **caractérisé par** au moins un contrôleur de source d'énergie (22) qui est configuré pour commander ladite au moins une source d'énergie (12), respectivement,
dans lequel le contrôleur (14) est configuré pour transmettre, à chacun dudit au moins un contrôleur de source d'énergie (22), une valeur totale d'une première valeur de commande correspondant à la poussée de l'une correspondante parmi lesdites au moins une source d'énergie (12) nécessaire à effectuer la commande de positionnement dynamique, et une deuxième valeur de commande correspondant à la poussée de l'une correspondante parmi lesdites au moins une source d'énergie (12) nécessaire à effectuer la commande de décélération.

3. Système de commande de propulsion (13) selon la revendication 2, **caractérisé en ce que** le contrôleur (14) est configuré pour ajuster la première valeur de commande et la deuxième valeur de commande de sorte que chacune desdites au moins une source d'énergie (12) génère une poussée sur la base de la valeur totale dans une direction opposée à la direction de la proue du navire (10).

4. Système de commande de propulsion (13) selon la revendication 2 ou 3, **caractérisé en ce que** le contrôleur (14) est configuré pour déterminer s'il convient ou non d'effectuer la commande de décélération selon les informations relatives aux spécifications de ladite au moins une source d'énergie (12) et au nombre de ladite au moins une source d'énergie (12) incluse dans le navire (10).

5. Système de commande de propulsion (13) selon l'une quelconque des revendications 2 à 4, **caractérisé en ce que** le contrôleur (14) est configuré pour modifier la deuxième valeur de commande de sorte que la poussée de chacune desdites au moins une source d'énergie (12) nécessaire à effectuer la commande de décélération augmente progressivement au début de la commande de décélération.

6. Système de commande de propulsion (13) selon la revendication 5, **caractérisé en ce que** le contrôleur (14) est configuré pour maintenir la poussée de chacune desdites au moins une source d'énergie (12) nécessaire à effectuer la commande de décélération à une valeur prédéterminée, lorsque la poussée croissante de chacune desdites au moins une source d'énergie (12) nécessaire à effectuer la commande de décélération atteint ladite valeur prédéterminée tout en effectuant la commande de décélération.

7. Système de commande de propulsion (13) selon l'une quelconque des revendications 1 à 6, **caractérisé en ce que** le contrôleur (14) est configuré pour mettre fin à la commande de décélération lorsque la vitesse dans la direction de la proue du navire (10) devient égale ou inférieure à une autre vitesse prédéterminée tout en effectuant la commande de décélération.

8. Système de commande de propulsion (13) selon l'une quelconque des revendications 1 à 6, **caractérisé en ce que** le contrôleur (14) est configuré pour mettre fin à la commande de décélération lorsque la durée de la commande de décélération atteint une période de temps prédéterminée ou plus.

9. Système de commande de propulsion (13) selon la revendication 8, **caractérisé en ce que** la période de temps prédéterminée varie en fonction du nombre de ladite au moins une source d'énergie (12) incluse dans le navire (10) .

10. Système de commande de propulsion (13) selon l'une quelconque des revendications 1 à 6, **caractérisé en ce que** le contrôleur (14) est configuré pour mettre fin à la commande de décélération lorsqu'une position cible du navire (10) pour la commande de positionnement dynamique est déplacée dans la direction de la proue du navire (10).

11. Système de commande de propulsion (13) selon l'une quelconque des revendications 1 à 10, **caractérisé en ce que** le contrôleur (14) est configuré pour effectuer la commande de positionnement dynamique même après avoir mis fin à la commande de décélération.

12. Système de commande de propulsion (13) selon l'une quelconque des revendications 1 à 11, **caractérisé en ce que** le contrôleur (14) est configuré pour maintenir le gouvernail du navire (10) en position neutre tout en effectuant la commande de décélération.

13. Système de commande de propulsion (13) selon la revendication 1, **caractérisé en ce que** le contrôleur (14) est configuré pour acquérir la vitesse dans la direction de la proue du navire (10) sur la base d'une vitesse du navire et d'une direction de déplacement du navire (10), configuré pour effectuer la commande de décélération dans le cas où la vitesse dans la direction de la proue du navire (10) est égale ou supérieure à une vitesse prédéterminée, et configuré pour ajuster ladite vitesse prédéterminée en fonction de la taille du navire (10).

14. Navire (10) configuré pour effectuer une commande de positionnement dynamique et comprenant :
au moins une source d'énergie (12) configurée pour générer une poussée ; et
le système de commande de propulsion (13) selon l'une quelconque des revendications 1 à 13.

15. Procédé de commande de la propulsion d'un navire (10) incluant au moins une source d'énergie (12) destinée à générer une poussée, le procédé effectuant une commande de positionnement dynamique du navire (10), et comprenant
commander le déplacement du navire (10) par ladite au moins une source d'énergie (12) ;
**caractérisé en ce que,** tout en effectuant la commande de positionnement dynamique du navire (10), effectuer une commande de décélération qui réduit la vitesse dans la direction de la proue du navire (10), comprenant en outre l'acquisition de la vitesse dans la direction de la proue du navire (10), et effectuer la commande de décélération dans le cas où la vitesse dans la direction de la proue du navire (10) est égale ou supérieure à une vitesse prédéterminée.
